# EUROPEAN PATENT APPLICATION

(11) **EP 4 819 120 A1**
(43) Date of publication of application: **07.10.2026**
(21) Application number: 24896397.7
(22) Date of filing: 21.11.2024
(51) Int. Cl.: G09G 3/34

(54) **BACKLIGHT CONTROL CIRCUIT OF SCREEN, AND VIRTUAL REALITY DEVICE**

(30) Priority: 30.11.2023 CN 202311630504
(71) Applicant: Beijing Zitiao Network Technology Co., Ltd., Beijing 100190 (CN)
(72) Inventor: XU, Lintao, Beijing 100028 (CN); XIA, Jiu, Beijing 100028 (CN); LIU, Shulin, Beijing 100028 (CN); LI, Julong, Beijing 100028 (CN); WANG, Kaiyang, Beijing 100028 (CN)
(74) Representative: Isarpatent
(86) International application number: PCT/CN2024/133477
(87) International publication number: WO 2025/113306

(57) **Abstract**

A backlight control circuit of a screen, and a virtual reality device. The backlight control circuit comprises: a control circuit, a boost circuit, a backlight circuit, a constant current source circuit, and a screen, wherein the control circuit is separately connected to the boost circuit, the screen, and the constant current source circuit, and the backlight circuit is separately connected to the boost circuit, the screen, and the constant current source circuit; the boost circuit is used for outputting voltage to supply power to the backlight circuit; the constant current source circuit is used for controlling the current of the backlight circuit to be constant; the control circuit is used for controlling, by means of the screen, a light-emitting element in the backlight circuit to be turned on or turned off, and controlling the boost circuit on the basis of the voltage of the constant current source circuit. The power consumption of the backlight control circuit is reduced, and the accuracy of voltage control is improved.

## Description

This application claims priority to Chinese Patent Application No. 202311630504.7 filed on November 30, 2023, the disclosure of which is incorporated herein by reference in its entirety as part of the present application.

### TECHNICAL FIELD

Embodiments of the present disclosure relate to a backlight control circuit for a screen and a virtual reality device.

### BACKGROUND

An optical display effect of a screen in a virtual reality (VR) device is related to experience of a user using the VR device.

At present, for adjusting brightness of the screen of the VR device, a low-frequency pulse-width modulation (PWM) signal may be used. For example, the VR device may control, based on the PWM signal, a time proportion of a light bulb in the screen being lit to be 10%, which may avoid long-time lighting and ensure a display effect. However, a boost circuit is in a state of small load and low efficiency, which leads to high power consumption of the circuit.

### SUMMARY

The present disclosure provides a backlight control circuit for a screen and a virtual reality device, which are used to solve a technical problem of relatively high power consumption of a circuit.

In a first aspect, the present disclosure provides a backlight control circuit for a screen, including: a control circuit, a boost circuit, a backlight circuit, a constant current source circuit, and a screen, where,
the control circuit is connected with the boost circuit, the screen, and the constant current source circuit respectively, and the backlight circuit is connected with the boost circuit, the screen, and the constant current source circuit respectively;
the boost circuit is configured to output voltage to supply power to the backlight circuit, and the constant current source circuit is configured to control current of the backlight circuit to be constant;
the control circuit is configured to control, via the screen, a light emitting element in the backlight circuit to be lit or extinguished, and control the boost circuit according to voltage of the constant current source circuit.

In a second aspect, the present disclosure provides a virtual reality device, including a glasses body and the backlight control circuit as described in the first aspect, where the backlight control circuit is arranged in the glasses body.

### BRIEF DESCRIPTION OF DRAWINGS

In order to more clearly explain the technical solutions in the embodiments of the present disclosure, the following will briefly introduce the drawings that need to be used in the description of the embodiments. Obviously, the drawings in the following description are some embodiments of the present disclosure. For those of ordinary skill in the art, other drawings may be obtained based on these drawings without paying creative efforts.
Fig. 1 is a schematic diagram of an application scenario provided by an embodiment of the present disclosure;
Fig. 2 is a schematic structural diagram of a backlight control circuit provided by an embodiment of the present disclosure;
Fig. 3 is a schematic structural diagram of another backlight control circuit provided by an embodiment of the present disclosure;
Fig. 4 is a schematic voltage diagram of a constant current source circuit provided by an embodiment of the present disclosure;
Fig. 5 is a schematic structural diagram of another backlight control circuit provided by an embodiment of the present disclosure;
Fig. 6 is a schematic diagram of a working process of a backlight control circuit provided by an embodiment of the present disclosure;
Fig. 7 is a schematic structural diagram of another backlight control circuit provided by an embodiment of the present disclosure;
Fig. 8 is a schematic diagram of a comparison result provided by an embodiment of the present disclosure;
Fig. 9 is a schematic diagram of a relationship between a boost circuit and a comparator provided by an embodiment of the present disclosure; and
Fig. 10 is a schematic diagram of a working process of a backlight control circuit provided by an embodiment of the present disclosure.

### DETAILED DESCRIPTION

Here, the exemplary embodiments will be described in detail, examples of which are shown in the drawings. When the following description refers to the drawings, unless otherwise indicated, the same numbers in different drawings represent the same or similar elements. The implementations described in the following exemplary embodiments do not represent all implementations consistent with the present disclosure. On the contrary, they are only examples of apparatus and methods consistent with some aspects of the present disclosure as detailed in the appended claims.

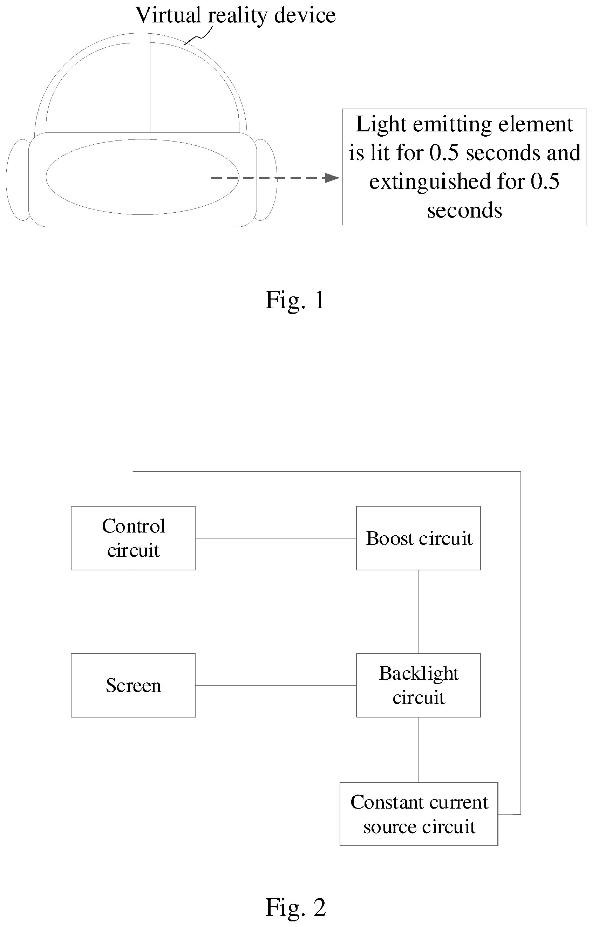

Next, an application scenario of the embodiments of the present disclosure will be described with reference to Fig. 1.

Fig. 1 is a schematic diagram of an application scenario provided by an embodiment of the present disclosure. Please refer to Fig. 1, which includes a virtual reality device. A screen of the virtual reality device may play a virtual reality video. When the virtual reality device is in use, a light emitting element in the screen does not need to be always on. For example, the light emitting element in the screen may be periodically lit for 0.5 seconds and extinguished for 0.5 seconds, which may adjust brightness of the screen of the virtual reality device and ensure a playing effect of the screen. It should be noted that when the brightness of the screen is increased, a proportion of time for the light emitting element being lit may be increased; and when the brightness of the screen is decreased, the proportion of time for the light emitting element being lit may be reduced. In addition, in the present disclosure, only a period of 1 second is taken as an example for description, and an actual working period of the light emitting element in the screen may be much less than 1 second.

It should be noted that Fig. 1 is only an example to illustrate the application scenario of the embodiments of the present disclosure, and is not a limitation on the application scenario of the embodiments of the present disclosure.

In related art, an optical display effect of a screen in a VR device is related to experience of a user using the VR device. At present, for adjusting brightness of the screen of the VR device, a low-frequency PWM signal may be used. Since human eyes have a delay in viewing images, the low-frequency PWM signal may not only ensure a display effect of the screen, but also avoid the light emitting element in the screen from being continuously lit. For example, the VR device may control, based on the PWM signal, a proportion of screen-on time of the screen to be 10%, that is, the light emitting element in the screen is off in 90% of the time period, and the light emitting element in the screen is on in 10% of the time period. Since the screen of the VR device requires great brightness, backlight current of the screen is large, and thus the light emitting element in the screen needs to be boosted. At present, a constant voltage boost circuit in combination with a high-output capacitor may be used to supply power for screen backlight, so as to meet requirements of a high boost ratio and a large current in a short time. However, after the voltage reaches a boost value, the constant voltage boost circuit will stop working, but the current may be continuously input to the boost circuit, which makes the boost circuit in a state of small load and low efficiency, and further leads to high power consumption of the circuit.

In order to solve the technical problem in the related art, an embodiment of the present disclosure provides a backlight control circuit for a screen, including a control circuit, a boost circuit, a backlight circuit, a constant current source circuit, and a screen, where the control circuit is connected with the boost circuit, the screen, and the constant current source circuit respectively, and the backlight circuit is connected with the boost circuit, the screen, and the constant current source circuit respectively, where the boost circuit may output voltage to supply power to the backlight circuit, and the constant current source circuit may control current of the backlight circuit to be constant, so as to improve stability of screen display, moreover, the control circuit may control, via the screen, a light emitting element in the backlight circuit to be lit or extinguished, and the control circuit may control the boost circuit according to voltage of the constant current source circuit. According to the above backlight control circuit, since a pressure difference between the constant current source circuit and the backlight circuit is stable, the control circuit may sample voltage across the constant current source circuit: when the voltage of the constant current source circuit is relatively small, the control circuit may control the boost circuit to boost voltage for a long time; and when the voltage of the constant current source circuit is relatively large, the control circuit may control the boost circuit to reduce voltage within a period of time, in this way, it may be ensured that the boost circuit works continuously, and working efficiency of the boost circuit is relatively high, thereby reducing power consumption, moreover, the constant current source circuit may ensure current stability of the backlight circuit, avoid relatively large ripple, and improve an effect of screen display.

The technical solutions of the present disclosure and how the technical solutions of the present disclosure solve the above technical problem will be described in detail below with specific embodiments. The following specific embodiments may be combined with each other, and the same or similar concepts or processes may not be repeated in certain embodiments. The embodiments of the present disclosure will be described below in combination with the drawings.

Fig. 2 is a schematic structural diagram of a backlight control circuit provided by an embodiment of the present disclosure. Referring to Fig. 2, the backlight control circuit includes a control circuit, a boost circuit, a screen, a backlight circuit, and a constant current source circuit. The control circuit is connected with the boost circuit, the screen, and the constant current source circuit respectively, and the backlight circuit is connected with the boost circuit, the screen, and the constant current source circuit respectively.

The control circuit is configured to control, via the screen, a light emitting element in the backlight circuit to be lit or extinguished, and control the boost circuit according to voltage of the constant current source circuit. For example, the light emitting element may be a light bulb, and the light emitting element may also be other arbitrary devices that may emit light, which is not limited in the embodiment of the present disclosure. For example, the control circuit may sample the voltage of the constant current source circuit, and send a PWM signal to the boost circuit based on the voltage of the constant current source circuit, and the boost circuit may work according to the PWM signal to perform boost processing on the backlight circuit.

For example, if the voltage of the constant current source circuit sampled by the control circuit is relatively small, the control circuit may generate a related PWM signal with a large duty ratio, and the boost circuit works based on the PWM signal to increase voltage of the backlight circuit; and if the voltage of the constant current source circuit sampled by the control circuit is relatively large, the control circuit may generate a related PWM signal with a small duty ratio, and the boost circuit works based on the PWM signal to reduce the voltage of the backlight circuit.

For example, the control circuit may send, to the screen, light control information for controlling the light emitting element to be on or off, and the screen may control, according to the light control information, the light emitting element in the backlight circuit to be lit or extinguished. For example, the light control information sent by the control circuit to the screen may be: lighting the light emitting element at time A and extinguishing the light emitting element at time B, then the screen may control, based on the light control information, the light emitting element of the backlight circuit to be lit at time A and control the light emitting element of the backlight circuit to be extinguished at time B.

The screen may be a screen in a VR device, and the backlight circuit may be arranged in the screen. Optionally, the backlight circuit may include a plurality of light emitting elements. For example, the backlight circuit may include a plurality of light emitting elements made of arbitrary materials, the plurality of light emitting elements may be periodically lit and extinguished, and the longer the time for the light emitting elements being lit in a period, the brighter the brightness of the screen, and the longer the time for the light emitting elements being extinguished in a period, the darker the brightness of the screen.

It should be noted that a working period of the light emitting element may be of arbitrary duration (for example, 0.1 second, 0.2 second, etc.), which is not limited in the embodiment of the present disclosure.

The boost circuit is configured to output voltage to supply power to the backlight circuit. For example, the boost circuit may be a boost circuit, and the boost circuit may perform boost processing on input voltage, and then output higher voltage. For example, if input voltage of the boost circuit is 10V, output voltage of the boost circuit may be 20V.

It should be noted that the above boost circuit is only an example of the boost circuit, and is not a limitation on the boost circuit in the embodiments of the present disclosure. The boost circuit in the embodiments of the present disclosure may be any circuit that has a voltage boost function, which is not limited in the embodiments of the present disclosure.

The constant current source circuit is configured to control current of the backlight circuit to be constant. For example, the backlight control circuit for a screen is based on the constant current source circuit, which may ensure that the current in the backlight circuit is constant, and then may reduce current ripple, avoid damage to the light emitting element in the backlight circuit, and prolong a service life of the light emitting element in the backlight circuit.

It should be noted that, the constant current source circuit in the embodiment of the present disclosure may also be grounded, the constant current source circuit in the embodiment of the present disclosure may be any circuit that has a function of stabilizing current, and a structure of the constant current source circuit is not limited in the embodiment of the present disclosure.

It should be noted that, the backlight control circuit for a screen in the embodiment of the present disclosure may further include a power supply, and a connection relationship between the power supply and components in the backlight control circuit for a screen is not limited in the embodiment of the present disclosure.

The embodiment of the present disclosure provides a backlight control circuit, the backlight control circuit includes a control circuit, a boost circuit, a backlight circuit, a constant current source circuit, and a screen, where the control circuit may send light control information to the screen, and the screen may control, based on the light control information, a light emitting element in the backlight circuit to be lit or extinguished, moreover, the control circuit may sample voltage across the constant current source circuit, and send a PWM signal to the boost circuit based on voltage of the constant current source circuit, so as to enable the boost circuit to work based on the PWM signal. In this way, the boost circuit in the backlight control circuit may work continuously, and working efficiency of the boost circuit is relatively high, moreover, the constant current source circuit may ensure current stability of the backlight circuit, avoid damage to the light emitting element in the backlight circuit, and voltage stability across the constant current source circuit is relatively high, and the control circuit controls the boost circuit based on the voltage of the constant current source circuit, which may improve accuracy of the work of the boost circuit.

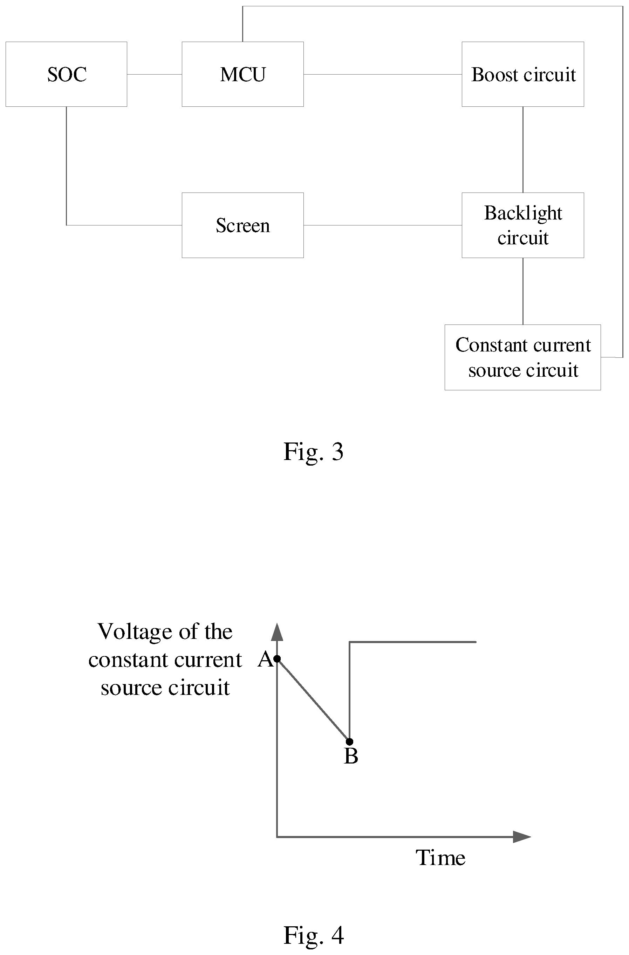

On the basis of the embodiment shown in Fig. 2, the control circuit includes a system-on-chip (SOC) and a microcontroller unit (MCU). Next, with reference to Fig. 3, the structure of the above backlight control circuit will be further described.

Fig. 3 is a schematic structural diagram of another backlight control circuit provided by an embodiment of the present disclosure. On the basis of the embodiment shown in Fig. 2, referring to Fig. 3, the control circuit includes a system-on-chip (SOC) and a microcontroller unit (MCU), where the SOC is connected with the MCU and the screen respectively, and the MCU is also connected with the boost circuit and the constant current source circuit. The SOC is configured to control, via the screen, the light emitting element circuit in the backlight circuit to be on or off, and the SOC is also configured to send a backlight synchronization signal to the MCU. The MCU is configured to generate a pulse-width modulation signal and control the boost circuit based on the pulse-width modulation signal.

Optionally, the backlight synchronization signal may be used to indicate a voltage sampling moment. For example, the backlight synchronization signal may synchronize the moment when the MCU performs voltage sampling, and the backlight synchronization signal may include a plurality of signals for indicating the moment of voltage sampling, and the MCU may sample the voltage of the constant current source circuit at an associated moment based on the signals.

Optionally, the SOC may determine the backlight synchronization signal according to an interrupt signal of the light emitting element in the screen, and send the backlight synchronization signal to the MCU. For example, in a practical application process, voltage will continuously drop after the light emitting element in the backlight circuit is lit, and the voltage will rise after the light emitting element is extinguished, therefore, the backlight synchronization signal generated by the SOC may instruct the MCU to perform voltage sampling at the moment when the light emitting element is extinguished (that is, sampling a lowest point of the voltage of the constant current source circuit, and the MCU may determine the sampling moment of the lowest voltage point based on the backlight synchronization signal).

Next, the voltage of the constant current source circuit will be described with reference to Fig. 4.

Fig. 4 is a schematic voltage diagram of a constant current source circuit provided by an embodiment of the present disclosure. Referring to Fig. 4, it includes a coordinate system. An ordinate of the coordinate system is voltage, an abscissa of the coordinate system is time, and the coordinate system includes a line of the voltage of the constant current source circuit changing with time. In a stage from point A to point B, the light emitting element in the backlight circuit is lit, and the voltage of the constant current source circuit drops; and in a stage after point B, the light emitting element in the backlight circuit is extinguished, and the voltage of the constant current source circuit rises. In the embodiment of the present disclosure, the MCU, based on the backlight synchronization signal, may perform voltage sampling at the moment when the backlight is off at point B, and then obtain the lowest voltage of the constant current source circuit by sampling, and control the work of the boost circuit based on the voltage, so as to ensure that the light emitting element is lit, and improve the work efficiency of the boost circuit.

Optionally, when the SOC controls, via the screen, the light emitting element circuit in the backlight circuit to be on or off, the SOC is further configured to send light control information to the screen, and the screen is further configured to generate, according to the light control information, a backlight pulse-width modulation signal, and send the backlight pulse-width modulation signal to the backlight circuit, so as to enable the backlight circuit to light the light emitting element or extinguish the light emitting element according to the backlight pulse-width modulation signal.

The backlight pulse-width modulation signal may be used to control the light emitting element to be lit or extinguished. For example, the backlight circuit lights the light emitting element in a high-level stage of the backlight PWM signal and extinguishes the light emitting element in a low-level stage of the backlight PWM signal. For example, in a practical application process, the light emitting element of the backlight circuit may be controlled by the screen, therefore, after obtaining the light control information, the screen may generate a corresponding backlight PWM signal, so that the light emitting element in the backlight circuit is lit or extinguished based on the light control information.

Optionally, the backlight control circuit further includes an analog-to-digital converter (ADC). The ADC is connected with the MCU and the constant current source circuit respectively, and the ADC is configured to sample the voltage of the constant current source circuit and send the voltage of the constant current source circuit to the MCU.

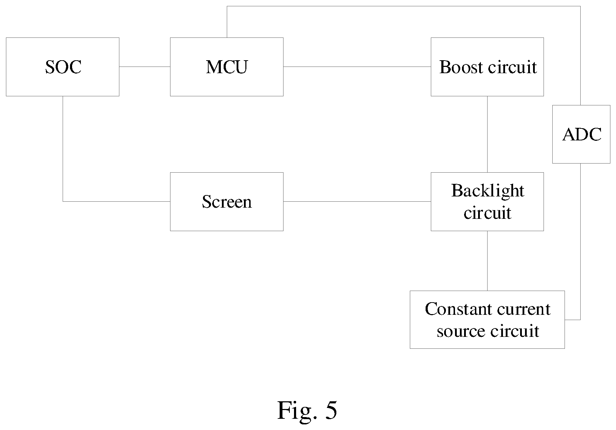

Next, the structure of the backlight control circuit will be described with reference to Fig. 5.

Fig. 5 is a schematic structural diagram of another backlight control circuit provided by an embodiment of the present disclosure. Referring to Fig. 5, it includes: an SOC, an MCU, a boost circuit, a screen, a backlight circuit, a constant current source circuit, and an ADC. The backlight circuit is connected with the screen, the constant current source circuit, and the boost circuit respectively, the MCU is connected with the SOC, the boost circuit, and the ADC respectively, the ADC is also connected with the constant current source circuit, and the SOC is also connected with the screen. The ADC may be configured to sample the voltage of the constant current source circuit and send the voltage of the constant current source circuit to the MCU, so that the MCU may control the boost circuit based on the voltage of the constant current source circuit, thereby improving boost accuracy of the boost circuit.

Optionally, the MCU is further configured to: determine a voltage sampling moment according to the backlight synchronization signal, control, at the voltage sampling moment, the ADC to collect the voltage of the constant current source circuit, generate a first pulse-width modulation signal according to the voltage of the constant current source circuit, and send the first pulse-width modulation signal to the boost circuit, so as to enable the boost circuit to work according to the first pulse-width modulation signal.

Optionally, the voltage sampling moment may be a moment corresponding to lowest voltage of the constant current source circuit. For example, in order to ensure the brightness of the screen, the light emitting element may also be normally lit when the voltage across the light emitting element is the lowest (that is, the voltage drops after the light emitting element is lit, and the normal work of the light emitting element may also be satisfied when the voltage across the light emitting element is the lowest), therefore, the voltage sampling moment may be the moment corresponding to the lowest voltage of the constant current source circuit.

The first pulse-width modulation signal may control the boost circuit to work. Optionally, the MCU generates the first pulse-width modulation signal based on the voltage of the constant current source circuit, which may specifically be: determining a target difference between the voltage of the constant current source circuit and minimum working voltage of the constant current source circuit, and determining the first pulse-width modulation signal according to a correspondence between the target difference and a pulse-width modulation signal.

The minimum working voltage of the constant current source circuit may indicate whether the light emitting element may work normally. For example, if the voltage of the constant current source circuit is less than the minimum working voltage of the constant current source circuit, the light emitting element in the backlight control circuit cannot be lit, and if the voltage of the constant current source circuit is greater than or equal to the minimum working voltage of the constant current source circuit, the light emitting element in the backlight control circuit may be normally lit.

It should be noted that, the minimum working voltage of the constant current source circuit may be a preset voltage value, and may also be a voltage value set based on other arbitrary feasible methods, which is not limited in the embodiments of the present disclosure.

The target difference may be a difference between the voltage of the constant current source circuit and the minimum working voltage of the constant current source circuit. For example, if the output voltage is 21V, the number of the light emitting elements is 3, the voltage of each light emitting element is 6V, and the minimum working voltage of the constant current source circuit is 2V, then after the output voltage passes through a voltage drop of the 3 light emitting elements, the voltage of the constant current source circuit is 3V, therefore, the target difference between the voltage of the constant current source circuit and the minimum working voltage of the constant current source circuit is 1V, and the 1V may indicate that the output voltage is relatively large.

Optionally, the correspondence between the target difference and the pulse-width modulation signal may include a plurality of differences and a pulse-width modulation signal corresponding to each difference. For example, the correspondence between the target difference and the pulse-width modulation signal may be shown in Table 1:

**Table 1**

| Target difference | Pulse width modulation signal |
|---|---|
| Difference 1 | Pulse width modulation signal 1 |
| Difference 2 | Pulse width modulation signal 2 |
| Difference 3 | Pulse width modulation signal 3 |
| ······ | ······ |

It should be noted that, Table 1 only illustrates the correspondence between the target difference and the pulse-width modulation signal in the form of an example, and is not a limitation on the correspondence between the target difference and the pulse-width modulation signal.

For example, if the target difference between the voltage of the constant current source circuit and the minimum working voltage of the constant current source circuit is difference 1, the first pulse-width modulation signal is pulse-width modulation signal 1; if the target difference between the voltage of the constant current source circuit and the minimum working voltage of the constant current source circuit is difference 2, the first pulse-width modulation signal is pulse-width modulation signal 2; and if the target difference between the voltage of the constant current source circuit and the minimum working voltage of the constant current source circuit is difference 3, the first pulse-width modulation signal is pulse-width modulation signal 3.

The MCU may generate the first pulse-width modulation signal according to the voltage of the constant current source circuit, and send the first pulse-width modulation signal to the boost circuit, so as to enable the boost circuit to work according to the first pulse-width modulation signal. For example, after determining the voltage of the constant current source circuit, the MCU may generate a first PWM signal (pulse width corresponds to the target difference) based on the target difference between the voltage and the minimum working voltage of the constant current source circuit, and then send the first PWM signal to the boost circuit, and after receiving the first PWM signal, the boost circuit may work based on the first PWM signal. In this way, when the voltage of the constant current source circuit is greater than the minimum working voltage of the constant current source circuit, it indicates that the voltage output by the boost circuit is relatively high, and the first PWM signal may control the boost circuit to reduce voltage within a period of time; and when the voltage of the constant current source circuit is less than the minimum working voltage of the constant current source circuit, it indicates that the voltage output by the boost circuit is relatively low and cannot maintain the normal work of the light emitting element, therefore, the first PWM signal may control the boost circuit to boost voltage for a long time, thereby ensuring the normal work of the light emitting element.

It should be noted that, in the embodiment shown in Fig. 5, since the MCU may accurately sample the voltage of the constant current source circuit based on the ADC, when the MCU generates the first pulse-width modulation signal, a reference for modulation is: increasing the voltage of the constant current source circuit, so that the sampled voltage of the constant current source circuit is greater than or equal to the minimum working voltage of the constant current source circuit, in this way, it may be ensured that the light emitting element in the backlight circuit works normally.

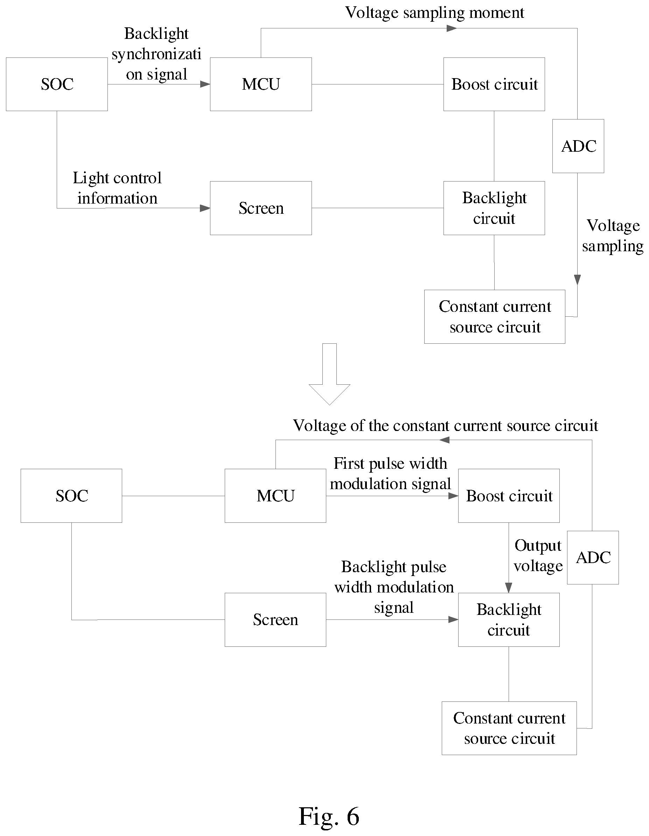

Next, with reference to Fig. 6, the working process of the backlight control circuit in the embodiment shown in Fig. 5 will be described.

Fig. 6 is a schematic diagram of a working process of a backlight control circuit provided by an embodiment of the present disclosure. Referring to Fig. 6, it includes an SOC, an MCU, a screen, a boost circuit, a backlight circuit, a constant current source circuit, and an ADC. The SOC may send light control information to the screen. The SOC may send a backlight synchronization signal to the MCU, and the MCU determines a voltage sampling moment based on the backlight synchronization signal, and controls the ADC to sample voltage of the constant current source circuit.

Referring to Fig. 6, the screen may generate, based on the light control information, a backlight pulse-width modulation signal, and send the backlight pulse-width modulation signal to the backlight circuit, so as to enable the light emitting element in the backlight circuit to be lit or extinguished according to the light control information. After receiving the voltage of the constant current source circuit, the MCU may determine, based on the voltage, a magnitude of the voltage output by the boost circuit, then generate the first pulse-width modulation signal based on the voltage of the constant current source circuit, and send the first pulse-width modulation signal to the boost circuit.

Referring to Fig. 6, the boost circuit may work based on the first pulse-width modulation signal, and then output voltage to the backlight circuit. The constant current source circuit may stabilize the current in the backlight circuit. The light emitting element in the backlight circuit may work based on the backlight pulse-width modulation signal, the voltage of the light emitting element in the backlight circuit is provided by the boost circuit, and the boost circuit is controlled by the first pulse-width modulation signal output by the MCU, in this way, the MCU may regulate and control the boost circuit in real time based on the voltage of the constant current source circuit, and since the voltage across the constant current source circuit is less affected by environmental factors such as temperature, the stability of the voltage across the constant current source circuit is relatively high, and the MCU may accurately control the boost circuit based on the voltage of the constant current source circuit, thereby improving the control accuracy of the boost circuit and reducing the power consumption of the circuit.

An embodiment of the present disclosure provides a backlight control circuit for a screen, the backlight control circuit includes a system-on-chip (SOC) and a microcontroller unit (MCU), as well as a boost circuit, a backlight circuit, a constant current source circuit, a screen, and an analog-to-digital converter (ADC). The SOC may send light control information to the screen, and the screen may generate, based on the light control information, a backlight PWM signal, so as to enable the backlight circuit to light or extinguish a light emitting element based on the backlight PWM signal, the SOC may send a backlight synchronization signal to the MCU, and the MCU may determine, based on the backlight synchronization signal, a voltage sampling moment, sample voltage of the constant current source circuit based on the voltage sampling moment and the ADC, and then control the boost circuit based on the voltage of the constant current source circuit. In this way, when the voltage of the constant current source circuit is relatively small, the MCU may control the boost circuit to boost voltage, and when the voltage of the constant current source circuit is relatively large, the MCU may control the boost circuit to reduce voltage within a period of time, in this way, it may be ensured that the light emitting element in the backlight circuit is normally lit, thereby improving a display effect of the screen, moreover, the boost circuit may work continuously, thereby improving the working efficiency of the boost circuit and reducing the power consumption of the circuit, moreover, the stability of the voltage across the constant current source circuit is relatively high, and the control accuracy of the boost circuit may be improved.

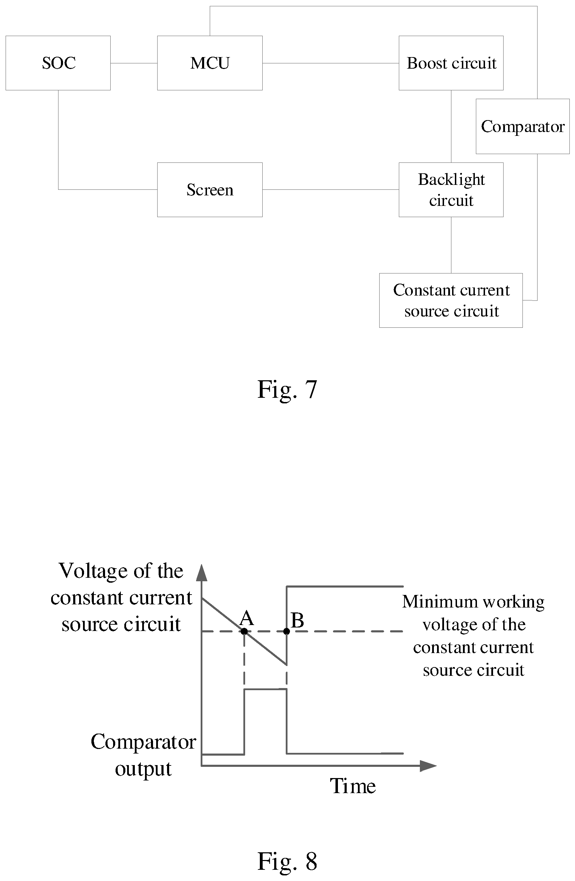

On the basis of any of the above embodiments, the backlight control circuit further includes a comparator, where the comparator may replace the ADC in the backlight control circuit. Next, with reference to Fig. 7, the structure of the above backlight control circuit will be described.

Fig. 7 is a schematic structural diagram of another backlight control circuit provided by an embodiment of the present disclosure. Referring to Fig. 7, it includes an SOC, an MCU, a boost circuit, a screen, a backlight circuit, a constant current source circuit, and a comparator. The backlight circuit is connected with the screen, the constant current source circuit, and the boost circuit respectively, the MCU is connected with the SOC and the boost circuit respectively, the comparator is connected with the MCU and the constant current source circuit respectively, and the SOC is also connected with the screen. The comparator is configured to generate a comparison result according to minimum working voltage of the constant current source circuit and the voltage of the constant current source circuit, and send the comparison result to the MCU.

Optionally, the comparison result may include a high level and a low level. For example, the high level duration and the low level duration in the comparison result may reflect the relationship between the voltage of the constant current source circuit and the minimum working voltage of the constant current source circuit, and after receiving the comparison result, the MCU may determine, based on the comparison result, whether the voltage output by the boost circuit is relatively large or relatively small, and then may accurately control the boost circuit.

Optionally, when the voltage of the constant current source circuit is less than the minimum working voltage of the constant current source circuit, the comparison result output by the comparator is a high level, and when the voltage of the constant current source circuit is greater than or equal to the minimum working voltage of the constant current source circuit, the comparison result output by the comparator is a low level. In this way, if the duration of the high level in the comparison result is relatively long, it indicates that the voltage of the constant current source circuit is less than the minimum working voltage of the constant current source circuit within a period of time, and the voltage output by the boost circuit is relatively small, and if there is no high level in the comparison result, it indicates that the voltage of the constant current source circuit is greater than the minimum working voltage of the constant current source circuit within a period of time, and the voltage output by the boost circuit may enable the light emitting element to work normally. For example, if the duration of one period is 1 second, and if the voltage of the constant current source circuit is continuously less than the minimum working voltage of the constant current source circuit within 0.3 second, and the voltage of the constant current source circuit is greater than or equal to the minimum working voltage of the constant current source circuit within 0.7 second, then the high level duration in the comparison result is 0.3 second, and the low level duration is 0.7 second.

Next, the comparison result will be described with reference to Fig. 8.

Fig. 8 is a schematic diagram of a comparison result provided by an embodiment of the present disclosure. Referring to Fig. 8, it includes a coordinate system. An abscissa of the coordinate system is time, and an ordinate of the coordinate system is voltage. The coordinate system includes a relationship between the voltage of the constant current source circuit and time, and a relationship between the comparison result output by the comparator and time. The voltage of the constant current source circuit is less than the minimum working voltage of the constant current source circuit between point A and point B, that is, the output of the comparator is a high level in the period between the moment of point A and the moment of point B (the light emitting element cannot work normally in this period), and the output of the comparator is a low level in other periods (the light emitting element may work normally in this period).

Optionally, the MCU is further configured to: generate a second pulse-width modulation signal according to the comparison result, and control the boost circuit based on the second pulse-width modulation signal. The second pulse-width modulation signal may control the boost circuit to work. For example, the MCU, based on the comparison result output by the comparator, may determine the magnitude between the voltage of the constant current source circuit and the minimum working voltage of the constant current source circuit within a period of time, and when the voltage of the constant current source circuit is less than the minimum working voltage of the constant current source circuit, generate the second pulse-width modulation signal that may enable the boost circuit to increase the boosting, and when the voltage of the constant current source circuit is greater than or equal to the minimum working voltage of the constant current source circuit, generate the second pulse-width modulation signal that may enable the boost circuit to reduce the boosting or keep the boosting unchanged.

Optionally, the MCU generates the second pulse-width modulation signal according to the comparison result, which may be implemented in the following two feasible manners:

A feasible implementation:
determining a duration of a high level in the comparison result, and generating the second pulse-width modulation signal based on the duration of the high level. For example, since the high level in the comparison result may indicate that the light emitting element cannot work normally, the MCU may generate the second pulse-width modulation signal based on the duration of the high level, so that the accuracy of the second pulse-width modulation signal may be improved, thereby improving the accuracy of controlling the boost circuit.

For example, in the embodiment shown in Fig. 8, the high level in the comparison result output by the comparator may indicate that the voltage of the constant current source circuit is less than the minimum working voltage of the constant current source circuit, and the light emitting element cannot be normally lit, therefore, a reference for the MCU to control the boost circuit is: reducing the duration of the high level in the comparison result of the comparator, that is, reducing the duration between the moment of point A and the moment of point B (for example, reducing the duration to 0). In this way, in Fig. 8, the MCU may increase the pulse width length of the second pulse-width modulation signal, and then may control the boost circuit to boost voltage, and after the boost circuit boosts voltage, the voltage of the constant current source circuit will also rise, thereby reducing the duration between point A and point B.

Optionally, the MCU may acquire a correspondence between the duration of the high level and the pulse-width modulation signal, and determine the second pulse-width modulation signal based on the duration of the high level and the correspondence. For example, the correspondence between the duration of the high level and the pulse-width modulation signal may be shown in Table 2:

**Table 2**

| Duration of high level | Pulse width modulation signal |
|---|---|
| Duration 1 | Pulse width modulation signal 1 |
| Duration 2 | Pulse width modulation signal 2 |
| Duration 3 | Pulse width modulation signal 3 |
| ······ | ······ |

It should be noted that, Table 2 only illustrates the correspondence between the duration of the high level and the pulse-width modulation signal in the form of an example, and is not a limitation on the correspondence between the duration of the high level and the pulse-width modulation signal.

For example, if the duration of the high level in the comparison result output by the comparator is duration 1, the second pulse-width modulation signal output by the MCU may be pulse-width modulation signal 1; if the duration of the high level in the comparison result output by the comparator is duration 2, the second pulse-width modulation signal output by the MCU may be pulse-width modulation signal 2; and if the duration of the high level in the comparison result output by the comparator is duration 3, the second pulse-width modulation signal output by the MCU may be pulse-width modulation signal 3.

It should be noted that, after acquiring the duration of the high level in the comparison result, the MCU may also generate the second pulse-width modulation signal based on other arbitrary feasible implementations, which is not limited in the embodiments of the present disclosure.

Another feasible implementation:
determining a duty ratio according to the comparison result, and generating the second pulse-width modulation signal according to the duty ratio. For example, since the MCU may determine a duty ratio according to the comparison result, and the duty ratio may reflect the duration that the light emitting element cannot work normally, the MCU may generate the second pulse-width modulation signal based on the duration of the high level, so that the accuracy of the second pulse-width modulation signal may be improved, thereby improving the accuracy of controlling the boost circuit.

Optionally, the MCU may acquire a correspondence between the duty ratio and the pulse-width modulation signal, and generate the second pulse-width modulation signal based on the correspondence and the duty ratio determined by the MCU based on the comparison result. For example, the correspondence between the duty ratio and the pulse-width modulation signal may be shown in Table 3:

**Table 3**

| Duty ratio | Pulse width modulation signal |
|---|---|
| Duty ratio 1 | Pulse width modulation signal 1 |
| Duty ratio 2 | Pulse width modulation signal 2 |
| Duty ratio 3 | Pulse width modulation signal 3 |
| ······ | ······ |

It should be noted that, Table 3 only illustrates the correspondence between the duty ratio and the pulse-width modulation signal in the form of an example, and is not a limitation on the correspondence between the duty ratio and the pulse-width modulation signal.

For example, if the duty ratio determined by the MCU based on the comparison result is duty ratio 1, the second pulse-width modulation signal output by the MCU may be pulse-width modulation signal 1; if the duty ratio determined by the MCU based on the comparison result is duty ratio 2, the second pulse-width modulation signal output by the MCU may be pulse-width modulation signal 2; and if the duty ratio determined by the MCU based on the comparison result is duty ratio 3, the second pulse-width modulation signal output by the MCU may be pulse-width modulation signal 3.

It should be noted that, in the embodiments of the present disclosure, if the voltage output by the boost circuit is relatively large to enable the light emitting element to be normally lit, in this scenario, the MCU may control the boost circuit to reduce the output voltage in a future period of time until the lowest voltage of the constant current source circuit is equal to the minimum working voltage of the constant current source circuit, and if the voltage output by the boost circuit is relatively small, resulting in the light emitting element being unable to be normally lit in some periods, in this scenario, the MCU may control the boost circuit to boost voltage until the lowest voltage of the constant current source circuit is greater than or equal to the minimum working voltage of the constant current source circuit.

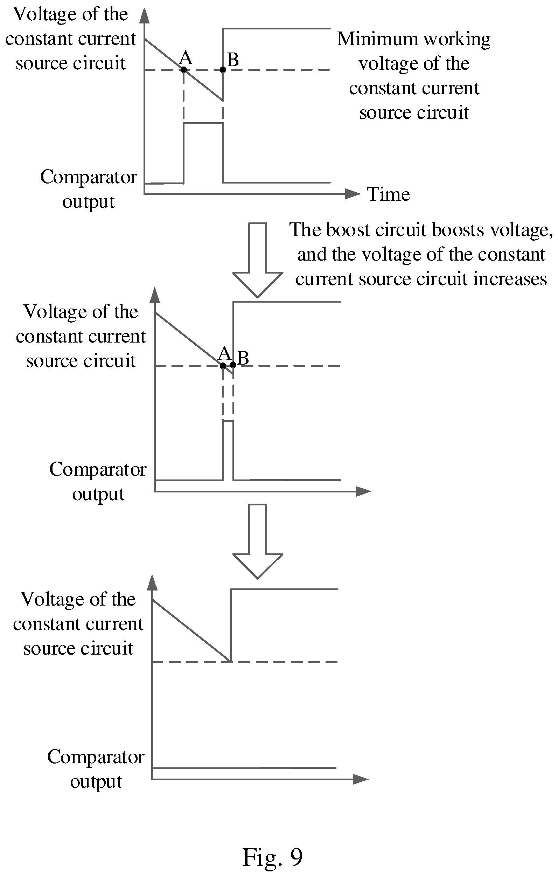

Next, with reference to Fig. 9, the control relationship between the comparison result output by the comparator and the boost circuit will be described.

Fig. 9 is a schematic diagram of a relationship between a boost circuit and a comparator provided by an embodiment of the present disclosure. Referring to Fig. 9, it includes a coordinate system. An ordinate of the coordinate system is voltage, and an abscissa of the coordinate system is time. The coordinate system includes a relationship between the voltage of the constant current source circuit and time, and a relationship between the comparison result output by the comparator and time. The voltage of the constant current source circuit is less than the minimum working voltage of the constant current source circuit between point A and point B, the light emitting element cannot be normally lit between the moment corresponding to point A and the moment corresponding to point B, and the comparator is at a high level in the period between the moment corresponding to point A and the moment corresponding to point B, and at a low level in other periods.

Referring to Fig. 9, the comparator may feed back, to the MCU (not shown in Fig. 9), the comparison result output by the comparator, and the MCU may determine, based on the comparison result, that the voltage boosting of the boost circuit (not shown in Fig. 9) is insufficient, therefore, the MCU may increase the pulse width length of the second pulse-width modulation signal, so as to enable the boost circuit to work based on the second pulse-width modulation signal, and the boost circuit boosts voltage, and the voltage of the constant current source circuit will increase.

Referring to Fig. 9, after the voltage of the constant current source circuit increases, the distance between point A and point B will be continuously reduced, and the proportion of the high level in the comparison result output by the comparator is also continuously reduced, until when the voltage of the constant current source circuit is greater than the minimum working voltage of the constant current source circuit, the light emitting element may be normally lit at the voltage output by the boost circuit, and the comparison result output by the comparator is a low level.

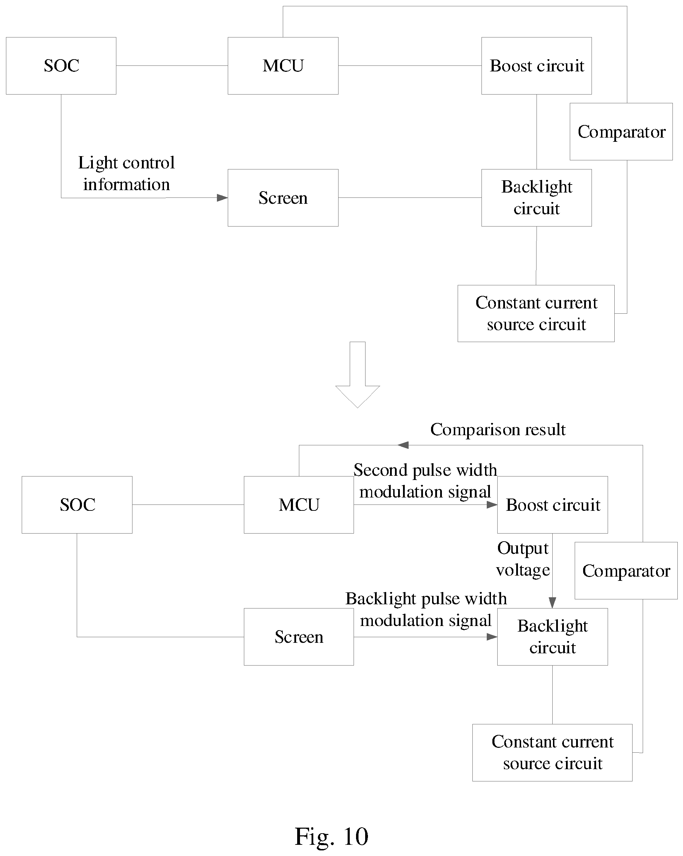

Next, with reference to Fig. 10, the working process of the backlight control circuit in the embodiment shown in Fig. 8 will be described.

Fig. 10 is a schematic diagram of a working process of a backlight control circuit provided by an embodiment of the present disclosure. Referring to Fig. 10, it includes: an SOC, an MCU, a screen, a boost circuit, a backlight circuit, a constant current source circuit, and a comparator. The SOC may send light control information to the screen. The screen may generate, based on the light control information, a backlight pulse-width modulation signal, and send the backlight pulse-width modulation signal to the backlight circuit, so as to enable the light emitting element in the backlight circuit to be lit or extinguished according to the light control information.

Referring to Fig. 10, the MCU may receive the comparison result output by the comparator, generate the second pulse-width modulation signal based on the duration of the high level in the comparison result, and send the second pulse-width modulation signal to the boost circuit. The boost circuit may work based on the second pulse-width modulation signal, and then output voltage to the backlight circuit. The constant current source circuit may stabilize the current in the backlight circuit.

Referring to Fig. 10, the light emitting element in the backlight circuit may be lit or extinguished based on the backlight pulse-width modulation signal, the voltage of the light emitting element in the backlight circuit is provided by the boost circuit, and the boost circuit is controlled by the second pulse-width modulation signal output by the MCU, in this way, the MCU may regulate and control the boost circuit in real time based on the comparison result output by the comparator, thereby improving the working efficiency and the voltage boosting accuracy of the boost circuit, and reducing the power consumption of the circuit.

An embodiment of the present disclosure provides a backlight control circuit for a screen, the backlight control circuit includes a system-on-chip (SOC) and a microcontroller unit (MCU), as well as a boost circuit, a backlight circuit, a constant current source circuit, a screen, and a comparator. The SOC may send light control information to the screen, and the screen may generate, based on the light control information, a backlight PWM signal, so as to enable the backlight circuit to light or extinguish a light emitting element based on the backlight PWM signal, the comparator may generate a comparison result according to minimum working voltage of the constant current source circuit and voltage of the constant current source circuit, and send the comparison result to the MCU, and the MCU generates a second pulse-width modulation signal according to the comparison result, and controls the boost circuit based on the second pulse-width modulation signal. In this way, since the comparison result may accurately reflect a relationship between the voltage of the constant current source circuit and the minimum working voltage of the constant current source circuit, the MCU may accurately determine the second pulse-width modulation signal based on the comparison result, thereby improving the accuracy of voltage boosting of the boost circuit, moreover, the boost circuit may work continuously, thereby improving the working efficiency of the boost circuit and reducing the power consumption of the circuit.

Optionally, on the basis of any of the above embodiments, an embodiment of the present disclosure further provides a virtual reality device. The virtual reality device includes a glasses body and the backlight control circuit as described in any of the above embodiments, and the backlight control circuit may be arranged in the glasses body.

In a first aspect, in one or more embodiments of the present disclosure, an embodiment of the present disclosure provides a backlight control circuit for a screen, including: a control circuit, a boost circuit, a backlight circuit, a constant current source circuit, and a screen, where,
the control circuit is connected with the boost circuit, the screen, and the constant current source circuit respectively, and the backlight circuit is connected with the boost circuit, the screen, and the constant current source circuit respectively;
the boost circuit is configured to output voltage to supply power to the backlight circuit, and the constant current source circuit is configured to control current of the backlight circuit to be constant;
the control circuit is configured to control, via the screen, a light emitting element in the backlight circuit to be lit or extinguished, and control the boost circuit according to voltage of the constant current source circuit.

According to one or more embodiments of the present disclosure, the control circuit includes a system-on-chip (SOC) and a microcontroller unit (MCU), where,
the SOC is connected with the MCU and the screen respectively, and the MCU is also connected with the boost circuit and the constant current source circuit;
the SOC is configured to control, via the screen, the light emitting element in the backlight circuit to be lit or extinguished;
the MCU is configured to generate a pulse-width modulation signal and control the boost circuit based on the pulse-width modulation signal.

According to one or more embodiments of the present disclosure, the backlight control circuit further includes an analog-to-digital converter (ADC), where,
the ADC is connected with the MCU and the constant current source circuit respectively;
the ADC is configured to sample the voltage of the constant current source circuit and send the voltage of the constant current source circuit to the MCU;
the SOC is also configured to send a backlight synchronization signal to the MCU.

According to one or more embodiments of the present disclosure, the MCU is further configured to:
determine the voltage sampling moment according to the backlight synchronization signal;
control, at the voltage sampling moment, the ADC to acquire the voltage of the constant current source circuit, and generate a first pulse-width modulation signal according to the voltage of the constant current source circuit;
send the first pulse-width modulation signal to the boost circuit, so as to enable the boost circuit to work according to the first pulse-width modulation signal.

According to one or more embodiments of the present disclosure, the backlight control circuit further includes a comparator, where,
the comparator is connected with the MCU and the constant current source circuit respectively;
the comparator is configured to generate a comparison result according to minimum working voltage of the constant current source circuit and the voltage of the constant current source circuit, and send the comparison result to the MCU;
the MCU is further configured to generate, according to the comparison result, a second pulse-width modulation signal, and control the boost circuit based on the second pulse-width modulation signal.

According to one or more embodiments of the present disclosure, when the voltage of the constant current source circuit is less than the minimum working voltage of the constant current source circuit, the comparison result output by the comparator is a high level, and when the voltage of the constant current source circuit is greater than or equal to the minimum working voltage of the constant current source circuit, the comparison result output by the comparator is a low level.

According to one or more embodiments of the present disclosure, the MCU is further configured to:
determine a duration of the high level in the comparison result;
generate the second pulse-width modulation signal based on the duration of the high level.

According to one or more embodiments of the present disclosure, the MCU is further configured to:
determine a duty ratio according to the comparison result;
generate the second pulse-width modulation signal according to the duty ratio.

According to one or more embodiments of the present disclosure, the SOC is further configured to send light control information to the screen, the light control information is used to control the light emitting element in the backlight circuit to be lit or extinguished;
the screen is further configured to generate, according to the light control information, a backlight pulse-width modulation signal, and send the backlight pulse-width modulation signal to the backlight circuit, so as to enable the backlight circuit to light the light emitting element or extinguish the light emitting element according to the backlight pulse-width modulation signal.

In a second aspect, according to one or more embodiments of the present disclosure, an embodiment of the present disclosure provides a virtual reality device, the virtual reality device includes a glasses body and the backlight control circuit as described in any of the above embodiments, where, the backlight control circuit is arranged in the glasses body.

It should be noted that the modifications of "one" and "multiple" mentioned in the present disclosure are illustrative rather than restrictive, and those skilled in the art should understand that they should be understood as "one or multiple" unless otherwise explicitly specified in the context.

The above description is only the explanation of the technical principles applied by the embodiments of the present disclosure. Those skilled in the art should understand that the scope of disclosure involved in the present disclosure is not limited to the technical solutions formed by the specific combination of the above technical features, but also covers other technical solutions formed by the arbitrary combination of the above technical features or their equivalent features without departing from the above disclosure concept. For example, the above features and the technical features provided in the present disclosure (but not limited to) with similar functions may be replaced each other to form a technical solution.

In addition, although the operations have been described in a particular order, this should not be understood as requiring the operations to be performed in the particular order shown or in a sequential order. Under certain circumstances, multitasking and parallel processing may be beneficial. Likewise, although the above discussion contains a number of specific implementation details, these should not be interpreted as limiting the scope of the present disclosure. Certain features described in the context of separate embodiments may also be implemented in a single embodiment in combination. On the contrary, various features described in the context of a single embodiment may also be implemented in multiple embodiments individually or in any suitable sub combination.

Although the present disclosure has been described in the language specific to the structural features and/or method logic actions, it should be understood that the subject matter defined in the appended claims is not necessarily limited to the specific features or actions described above. On the contrary, the specific features and actions described above are only exemplary forms of implementing the claims.

## Claims

1. A backlight control circuit for a screen, comprising: a control circuit, a boost circuit, a backlight circuit, a constant current source circuit, and a screen, wherein,
the control circuit is connected with the boost circuit, the screen, and the constant current source circuit respectively, and the backlight circuit is connected with the boost circuit, the screen, and the constant current source circuit respectively;
the boost circuit is configured to output voltage to supply power to the backlight circuit, and the constant current source circuit is configured to control current of the backlight circuit to be constant;
the control circuit is configured to control, via the screen, a light emitting element in the backlight circuit to be lit or extinguished, and control the boost circuit according to voltage of the constant current source circuit.

2. The backlight control circuit of claim 1, wherein, the control circuit comprises a system-on-chip SOC and a MCU, wherein,
the SOC is connected with the MCU and the screen respectively, and the MCU is further connected with the boost circuit and the constant current source circuit;
the SOC is configured to control, via the screen, the light emitting element in the backlight circuit to be lit or extinguished;
the MCU is configured to generate a pulse width modulation signal, and control the boost circuit based on the pulse width modulation signal.

3. The backlight control circuit of claim 2, further comprising an analog-to-digital converter ADC, wherein,
the ADC is connected with the MCU and the constant current source circuit respectively;
the ADC is configured to sample the voltage of the constant current source circuit, and send the voltage of the constant current source circuit to the MCU;
the SOC is further configured to send a backlight synchronization signal to the MCU.

4. The backlight control circuit of claim 3, wherein, the MCU is configured to:
determine a voltage sampling moment according to the backlight synchronization signal;
control, at the voltage sampling moment, the ADC to collect the voltage of the constant current source circuit, and generate a first pulse width modulation signal according to the voltage of the constant current source circuit;
send the first pulse width modulation signal to the boost circuit, such that the boost circuit operates according to the first pulse width modulation signal.

5. The backlight control circuit of any of claims 2-4, further comprising a comparator, wherein,
the comparator is connected with the MCU and the constant current source circuit respectively;
the comparator is configured to generate a comparison result according to a minimum working voltage of the constant current source circuit and the voltage of the constant current source circuit, and send the comparison result to the MCU;
the MCU is configured to generate, according to the comparison result, a second pulse width modulation signal, and control the boost circuit based on the second pulse width modulation signal.

6. The backlight control circuit of claim 5, wherein, in response to the voltage of the constant current source circuit being less than the minimum working voltage of the constant current source circuit, the comparison result output by the comparator is a high level, and in response to the voltage of the constant current source circuit being greater than or equal to the minimum working voltage of the constant current source circuit, the comparison result output by the comparator is a low level.

7. The backlight control circuit of claim 6, wherein, the MCU is configured to:
determine a duration of the high level in the comparison result;
generate the second pulse width modulation signal based on the duration of the high level.

8. The backlight control circuit of claim 5, wherein, the MCU is configured to:
determine a duty ratio according to the comparison result;
generate the second pulse width modulation signal according to the duty ratio.

9. The backlight control circuit of any of claims 2-8, wherein,
the SOC is configured to send light control information to the screen, the light control information is used to control the light emitting element in the backlight circuit to be lit or extinguished;
the screen is configured to generate, according to the light control information, a backlight pulse width modulation signal, and send the backlight pulse width modulation signal to the backlight circuit, such that the backlight circuit lights the light emitting element or extinguishes the light emitting element according to the backlight pulse width modulation signal.

10. A virtual reality device, comprising a glasses body and the backlight control circuit of any of claims 1-9, wherein, the backlight control circuit is disposed in the glasses body.
